# EUROPEAN PATENT APPLICATION

(11) **EP 1 511 349 A1**
(43) Date of publication of application: **02.03.2005**
(21) Application number: 03019771.9
(22) Date of filing: 29.08.2003
(51) Int. Cl.: H04Q 11/04, H04M 11/06

(54) **Phone client for VoDSL subscribers**

(71) Applicant: SIEMENS AKTIENGESELLSCHAFT, 80333 München (DE)
(72) Inventor: Prevec, Primoz, 1000 Ljubljana (SI)

(57) **Abstract**

An application is installed on a PC (202) that implements a customer premises gateway service. The PC (202) is coupled to a media gateway controller (205) substantially by direct connection for the purpose of controlling a voice over DSL call related to a user of the PC (202) without intervening customer premises gateway equipment. A network (208) transmits the voice over DSL call. A media gateway controller (205) controls the voice over DSL through the network (208).

## Description

### Phone Client for VoDSL subscribers

The field of the invention relates to a phone client for VoDSL subscribers.

In the field of voice over DSL (VoDSL), voice calls are converted into digital data packets and transmitted as multiple calls (lines) over a single line, or subscriber access line. In addition, VoDSL uses the DSL band width dynamically by consuming band width only when the call is active, leaving the band width available for other services, such as Internet access, when the call is not active. Today VoDSL provides voice quality comparable to traditional telephone services, offers connections options for all common single telephones as well as business telecom systems and supports standards-based network interfaces as well as allowing standard modem/fax calls over any line. Therefore, VoDSL stands to increase service-provider profits and is expected to be a strong contender in the telecom market place.

VoDSL is based on DSL, or digital subscriber line. DSL technology provides high-speed datarates over standard telephone access lines. It is always on avoids and is the need for Internet dial hive and up. Unlike cable modems, the DSL network connection and the related band width are not shared, so subscribers have dedicated, secure, high-performance connections to the Internet. DSL networks are packet-based, allowing VoDSL solutions to use the extra band width provided by the DSL connection for additional voice channels as well as data, enabling the service provider to sell multiple services, rather than a single voice or data service over a single access line.

The implementation 100 of VoDSL to an Internet protocol (IP network) is shown in Figure one. The user may either employ standard ISDN (integrated services digital network) or PATS (plain old telephone service) equipment or a personnel computer (PC 112, 114). To this day, either the standardardized telephone equipment 12 or the PC 14 must couple through a specialized hardware device, called a customer premises gateway (CPG 116). In addition to requiring the purchased and installation costs of additional equipment, the prior solution has to disadvantaged that the user must connect to the point of entry to the network 110 at the point of the CPG 116. In addition, the user is tied to the particular CPG 116 to which she is connected and, therefore, cannot transfer to another physical location without the hassle of installing a new CPG device and the reconfiguring her settings, such as data and phone numbers.

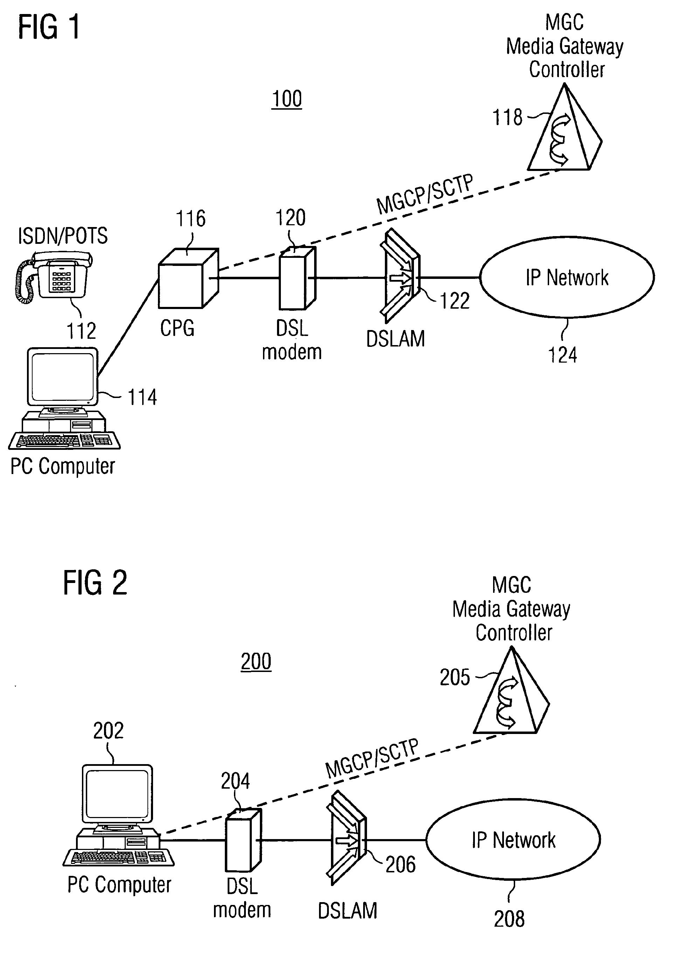

As shown in Figure 1, the CPG 116 is controlled by a switch, such as the media gateway controller 118 shown in the Figure. The call information must then be sent to a DSL Modem 220 for coding CODING into the DSL protocol. The DSL coded call information is then forwarded to a digital subscriber line access multiplexer (DSLAM) 122. The DSLAM 122 places the call information on a high-speed back bone line using multiplexing, using asynchronous transfer mode (ATM), frame relay or internet protocol (IP), e.g. The call information is then transferred over the IP network 124 to its destination according to standardized telecommunication call handling.

An object of the present invention is to provide VoDSL without requiring additional equipment.

Another object of the invention is to allow the user to connect anywhere in the network.

Another object of the invention is to allow the user to change locations without requiring to install a new device or change settings.

In summary, in accordance with the objects of the present invention, there is provided a method for voice over DSL. An application is installed on a PC that implements a customer premises gateway service. The PC is coupled to a media gateway controller substantially by direct connection for the purpose of controlling a voice over DSL call related to a user of the PC without intervening customer premises gateway equipment.

An apparatus for voice over DSL includes a personal computer (PC). An application is installed in the PC implementing a customer gateway premises service. A coupling couples the PC to a media gateway controller substantially by direct connection for the purpose of controlling a voice over DSL call related to a user of the PC without intervening customer premises gateway equipment.

A system for voice over DSL includes a PC with an application installed in the PC implementing a customer gateway premises service. A coupling couples the PC to a media gateway controller substantially by direct connection for the purpose of controlling a voice over DSL call related to a user of the PC without intervening customer premises gateway equipment. A network transmits the voice over DSL call. A controller controls the voice over DSL through the network.

The invention shall be described in reference to the Figures in which the embodiments shown are merely examples:
- Figure 1: shows the prior network;
- Figure 2: shows the invention; and
- Figure 3: shows an alternative arrangement of the invention.

Figure 2 shows the inventive arrangement 200. PC202 is directly connected to the switch 204, such that the switch or media gateway controller 205, directly controls the PC Computer. The PC Computer, loaded with a software application, provides the voice over DSL services and forwards the call information to a DSL modem 204, which then forwards the coded call information to the DSLAM 206 for handing onto the IP network 208. It shall be appreciated that the direct connection of the switch 204 to the PC 202 eliminates the need for additional hardware equipment, such as the CPG 116, as shown in Figure 1. It shall also be appreciated that the user is capable to connect anywhere in the network without additional equipment. Further, the user can connect to another location physically within the network without changing the settings or the re-establishing a new CPG.

The software application of the present invention provides voice services to the user, or subscriber, connected to the speech enabled IP network. It may 'space' be, in one variant a PC application. The software application is, in the preferred embodiment, compliant with media gateway control protocol MGCP, such that a call initiated over the PC is controlled by the media gateway controller 205 in accordance with the MGCP protocol. Of course, the application is capable to run on PC compatible computers, such as a computing device, personnel digital system (PA) or handheld PC's. In addition, the application offers all standard POTS/ ISDN/ CTX features. With those computing devices, it shall be appreciated that further applications, such as phone box, call lists, voice mail may 'space' be made available by those computing devices. It shall be understood that the standard protocols implemented on the PC are well-known and, therefor, will not be discussed in intricate detail here.

Thus, the application of a present invention replaces additional terminal equipment which must be installed as VoDSL subscriber-controlled via an MGCP connection. With the present invention, there is no need to purchase, install or maintain a CPG device. For that matter, there is no need for an additional phone set, as that provided by the standardized phone equipment 112 of Figure 1.

The application of the present invention, as installed on the PC 202, offers a certain degree of mobility. When the subscriber, or user, physically relocates the PC, the application is installed at the new location. All the settings, data and phone numbers are kept.

It show also be appreciated that the present invention can be connected anywhere in the network without additional equipment or installation. This is because the PC 202 is directly connected to the media gateway controller 205. With no intervening CPG hardware, the present invention may 'space' be moved to any point in the network. There is, thus, no more need for additional administration.

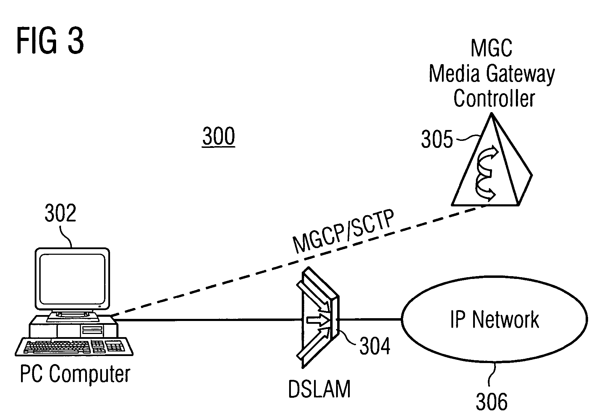

It show be appreciated that the settings can be downloaded from the network to the PC 202 from, e.g., the media gateway controller 204. In addition, an its shown in Figure 3, the PC 302 can be equipped with an internal DSL modem. In this case, the additional DSL modem is not needed. The media gateway controller 305 controls the PC 202 directly using MGCP and the call information is coded within the DSL of the PC 202. The coded information is then sent to the DSLAM 304 which carries the call information to the IP network 306.

While the present invention has been described in terms of MGCP for call control, the invention further provides RTP/RTCP protocol for audio stream control. The present invention will also provide audio CODECS and may further prioritize voice traffic over the data to assure the quality of voice services.

Thus, of the present invention, the direct connection of the media gateway controller to the PC provides that no additional hardware is needed. The invention, thus, is easy to use and therefore may be provides with a graphical user interface. It is a cost effective solution to adding additional equipment. The invention provides certain degree of portability without additional intervention of network administrators, such as installing and removing the CPG equipment. Further, the invention has the advantage of being integrable with other PC applications and a simple to upgrade and configure.

## Claims

1. A method for voice over DSL, comprising the steps of:
installing an application on a PC (114) that implements a customer premises gateway service (116); and
coupling the PC to a media gateway controller (118) substantially by direct connection for the purpose of controlling a voice over DSL call related to a user of the PC (114) without intervening customer premises gateway equipment (116).

2. The method of claim 1, further comprising the step of installing the application on the PC (114) at any physical location in a network without the need to install customer gateway premises equipment (116).

3. The method of claim 1, further comprising the step of relocating the PC (114) to another physical location without the need to reset settings on the PC customized for the voice over DSL call.

4. An apparatus for voice over DSL, comprising:
a personal computer (PC) (114);
an application installed in the PC implementing a customer gateway premises service (116); and
a coupling that couples the PC to a media gateway controller (118) substantially by direct connection for the purpose of controlling a voice over DSL call related to a user of the PC without intervening customer premises gateway equipment.

5. The apparatus of claim 4, further comprising a DSL connection for connecting the PC to the Internet.

6. The apparatus of claim 4, wherein the PC has an integrated DSL connection.

7. The apparatus of claim 4, further comprising a media gateway controller for controlling the voice over DSL call.

8. A system for voice over DSL, comprising:
a PC (114) with an application installed in the PC implementing a customer gateway premises service (116);
a network (124) for transmitting the voice over DSL call;
a controller (118) for controlling the voice over DSL through the network; and
a coupling that couples the PC to the controller (118) substantially by direct connection for the purpose of controlling a voice over DSL call related to a user of the PC without intervening customer premises gateway equipment (116).

9. The system of claim 8, further comprising a DSL modem (120) for connecting the PC to the network.

10. The system of claim 8. wherein the network is an Internet Protocol (IP) network (124).
